# EUROPEAN PATENT APPLICATION

(11) **EP 1 845 381 A1**
(43) Date of publication of application: **17.10.2007**
(21) Application number: 06766801.2
(22) Date of filing: 16.06.2006
(51) Int. Cl.: G01N 35/02

(54) **ANALYTICAL IMPLEMENT**

(30) Priority: 23.06.2005 JP 2005183806; 29.07.2005 JP 2005221479; 29.07.2005 JP 2005221480
(71) Applicant: Arkray, Inc., Kyoto-shi, Kyoto 601-8045 (JP)
(72) Inventor: NAKAMURA, Tsutomu c/o Arkray, Inc, Minami-ku, Kyoto 601-8045 (JP); MATSUMOTO, Daisuke c/o Arkray, Inc, Minami-ku, Kyoto 601-8045 (JP); SHIRAKI, Yasunori c/o Arkray, Inc, Minami-ku, Kyoto 601-8045 (JP)
(74) Representative: Neath, Susannah Mairi
(86) International application number: PCT/JP2006/312113
(87) International publication number: WO 2006/137334

(57) **Abstract**

The present invention provides an analysis tool that can achieve excellent stirring efficiency and can yield highly accurate and reliable analytical values. An analysis tool 1 for analyzing a component in a sample by reacting it with a reagent includes: the reagent, a magnetic material for stirring the sample and the reagent to mix them together; and a reagent arrangement portion 13. In the reagent arrangement portion 13, the reagent and the magnetic material are provided separately (the reagent parts 17 and the magnetic material part 18), and the magnetic material is fixed to the reagent arrangement portion 13 (the magnetic material part 18) with a water-soluble paste. As the water-soluble paste, it is possible to use carboxymethyl cellulose, for example. As the magnetic material, it is possible to use magnetic beads, for example.

## Description

### Technical Field

The present invention relates to an analysis tool.

### Background Art

Conventionally, analysis tools (also referred to as "test pieces") have been used for various purposes in tests such as clinical tests, for example. Examples of the analysis tool include one with a simple structure, obtained by arranging a filter paper impregnated with a reagent on a strip-shaped plastic substrate. Also, there is an analysis tool obtained by forming a groove serving as a sample channel and a recess serving as a reagent arrangement portion on a plastic substrate and then placing a plastic cover on the plastic substrate. In the analysis tool obtained by placing the plastic cover on the plastic substrate, when a sample such as blood or urine is supplied to the analysis tool, the sample moves to the recess through the groove by capillary action and reacts with a reagent arranged in the recess. The analysis is achieved by analyzing this reaction by an optical method.

In sample analyses including an analysis using an analysis tool, liquid stirring, e.g., stirring of a liquid sample such as blood with a reagent, is required in many cases. Examples of a method of stirring liquid include a method using a stirring rod and a method using a magnet stirrer. However, although these stirring methods are suitable for liquid stirring in a large container such as a beaker or a test tube, it is difficult to apply them to liquid stirring in a minute space such as the above-described analysis tool. Examples of a method of stirring liquid in a minute space include a method using magnetic beads (Patent Documents 1 to 6). Such a method is carried out by providing a dry reagent and magnetic beads in a reaction chamber that is a minute space, dissolving the dry reagent with a liquid sample, and moving the magnetic beads using a magnet arranged outside the reaction chamber to perform stirring. However, with the method using the magnetic beads, when the reagent is alkaline or acidic, the magnetic beads are dissolved by the reagent before using the analysis tool (e.g., during the storage of the analysis tool). This dissolution might affect the reaction of the reagent, resulting in a problem concerning the accuracy and reliability of the analytical value. Moreover, some of the plastics (e.g., polystyrene) that can be used as a material of the analysis tool tends to adsorb magnetic materials such as iron, and when the analysis tool is formed using such a plastic, stirring cannot be performed well.
Patent Document 1: JP 6(1994)-28594 B
Patent Document 2: Japanese Patent No. 2736091
Patent Document 3: Japanese Patent No. 3135057
Patent Document 4: Japanese Patent No. 2801403
Patent Document 5: JP 62(1987)-241539 A
Patent Document 6: JP 48(1973)-66895 A

### Disclosure of Invention

### Problem to be Solved by the Invention

With the foregoing in mind, it is an object of the present invention to provide an analysis tool that can achieve excellent stirring efficiency and can yield highly accurate and reliable analytical values.

### Means for Solving Problem

In order to achieve the above object, a first analysis tool of the present invention is an analysis tool that analyzes a component in a sample by reacting the component with a reagent, and includes: the reagent; and a magnetic material fine particle for stirring the sample and the reagent to mix them together. A reagent part having the reagent and a magnetic material part having the magnetic material fine particle are provided at different positions in the analysis tool, and the magnetic material fine particle is fixed to the analysis tool with a water-soluble paste.

Furthermore, a second analysis tool of the present invention includes, instead of the reagent part and the magnetic material part provided at the different positions, a magnetic material-containing reagent part having the reagent that contains the magnetic material fine particle. In this analysis tool, the magnetic material fine particle is coated with at least one of a water-insoluble resin and a nonmetallic inorganic material.

### Effects of the Invention

As described above, in the first analysis tool of the present invention, a reagent and magnetic material fine particles (hereinafter also referred to simply as a "magnetic material") are provided at different portions, and the magnetic material is fixed to the analysis tool with a water-soluble paste. Accordingly, before the use of the analysis tool, the reagent is not brought into contact with the magnetic material, so that the magnetic material can be prevented from being dissolved by the reagent and also from being adsorbed onto the components constituting the analysis tool. Furthermore, in the second analysis tool of the present invention, the magnetic material fine particles are coated with at least one of a water-insoluble resin and a nonmetallic inorganic material. Thus, if the magnetic material fine particles are contained in the reagent, the magnetic material fine particles can be prevented from being dissolved by the reagent and also from being adsorbed onto the components constituting the analysis tool. Therefore, the analysis tool of the present invention can achieve excellent stirring efficiency, so that it is possible to react the reagent and the sample sufficiently. Moreover, the analysis tool of the present invention also can prevent the magnetic material fine particles from being dissolved, thus achieving excellent analysis accuracy and reliability.

### Brief Description of Drawings

[FIG. 1] FIG. 1 shows an example of a first analysis tool of the present invention. FIG. 1A is a plan view of the first analysis tool, FIG. 1B is a sectional view of the first analysis tool, and FIG. 1C is a plan view showing a part of the first analysis tool.
[FIG. 2] FIG. 2 shows an example of an assembly of the first analysis tools of the present invention. FIG. 2A is a plan view of the assembly and FIG. 2B is a sectional view of the assembly.
[FIG. 3] FIG. 3 is a plan view showing another example of the assembly of the first analysis tools of the present invention.
[FIG. 4] FIG. 4 shows an example of a second analysis tool of the present invention. FIG. 4Ais a plan view of the second analysis tool, FIG. 4B is a sectional view of the second analysis tool, and FIGS. 4C and 4D are plan views showing a part of the second analysis tool.
[FIG. 5] FIG. 5 shows an example of an assembly of the second analysis tool of the present invention. FIG. 5A is a plan view of the assembly and FIG. 5B is a sectional view of the assembly.

### Explanation of reference numerals

- 1, 100, a, *b, c, d, e, f, g, h, i, j, k, l:*: analysis tool
- 2, 3, 200:: analysis tool assembly
- 11:: sample supply portion
- 12:: sample supply channel
- 13:: first reagent arrangement portion
- 14:: reagent arrangement portion-connecting channel
- 15:: second reagent arrangement portion
- 16:: first reagent arrangement portion-air vent hole
- 17, 171:: reagent part
- 18:: magnetic material part
- 19:: second reagent arrangement portion-air vent channel
- 20:: second reagent arrangement portion-air vent hole
- 21:: first reagent arrangement portion-air vent channel
- 111, 113:: substrate
- 112, 114:: cover

### Description of the Invention

### (First analysis tool of the present invention)

First, the first analysis tool of the present invention will be described. The first analysis tool of the present invention is, as described above, an analysis tool that analyzes a component in a sample by reacting the component with a reagent. The first analysis tool includes: the reagent; and magnetic material fine particles for stirring the sample and the reagent to mix them together. In the first analysis tool, a reagent part having the reagent and a magnetic material part having the magnetic material fine particles are provided at different positions, and the magnetic material fine particles are fixed to the analysis tool with a water-soluble paste. In the first analysis tool of the present invention, it is only necessary that the reagent and the magnetic material fine particles are arranged at different positions and that the magnetic material fine particles are fixed with a water-soluble paste. Except for these, there is no particular limitation on the configuration etc. of the first analysis tool.

In the first analysis tool of the present invention, the size of the magnetic material fine particle (the magnetic bead) is not particularly limited. Specifically, when the magnetic material fine particle is spherical, the diameter thereof is, for example, in the range from 0.1 to 100 µm, preferably from 0.1 to 20 µm, and more preferably from 0.5 to 10 µm. The type of the magnetic material is not particularly limited, and examples thereof include iron, iron oxide, and manganese zinc. Among these, iron oxide and manganese zinc are preferable, and manganese zinc is more preferable. Note here that the surface of the magnetic material fine particle may be coated with at least one of a water-insoluble resin and a nonmetallic inorganic material, as in the case of a second analysis tool that will be described later.

In the present invention, the water-soluble paste is not particularly limited as long as it can fix the magnetic material fine particles to the analysis tool and can release the fixed state of the magnetic material fine particles with a liquid component. Examples of the water-soluble paste include water-soluble polymers, saccharides, and proteins. The water-soluble polymers are not particularly limited, and those with high water decomposability can be used preferably. Examples of such water-soluble polymers include carboxymethyl cellulose (CMC), polyvinyl alcohol (PVA), and hydroxypropyl cellulose (HPC). Among these, CMC and PVA are preferable, and CMC is more preferable. Examples of the saccharides include glucose, sucrose, sorbitol, and trehalose, and examples of the proteins include albumins, such as bovine serum albumin, and silk protein. Although it is preferable in the present invention that the magnetic material fine particles are fixed with the water-soluble paste alone, the present invention is not limited thereto and the water-soluble paste may include an additional component. Furthermore, although the water-soluble paste to be used in the present invention is not particularly limited, it is desirable to use as the water-soluble paste a substance that does not affect the analysis, for example. Specifically, for example, when glucose is measured by the analysis tool of the present invention, it is preferable to use a substance other than glucose as the water-soluble paste, and when a protein is measured by the analysis tool of the present invention, it is preferable to use a substance other than the protein to be measured as the water-soluble paste.

The first analysis tool of the present invention may include a single reagent part and a single magnetic material part. Alternatively, the first analysis tool of the present invention may include two or more of the reagent parts and two or more of the magnetic material parts.

It is preferable that the first analysis tool of the present invention further includes a reagent arrangement portion (also referred to as a "reagent arrangement region"), and the reagent part preferably is arranged in the reagent arrangement portion. This reagent arrangement portion is provided, for example, in the case where a sample led to the analysis tool is brought into contact with a reagent(s) (one type of reagent or a combination of two or more types of reagents) necessary for causing a particular reaction. The number of the reagent parts in the reagent arrangement portion is not particularly limited, and can be determined as appropriate depending on the types of the reagents necessary for causing the reaction and the combination thereof. Specifically, when a plurality of reagents are necessary for causing a particular reaction, the plurality of reagents necessary for causing the reaction are arranged independently in the reagent arrangement portion, for example. Furthermore, when a sample is brought into contact with two or more types of reagents at the same time, a mixture of the plurality of reagents may be arranged, for example. By providing the plurality of reagent parts or the reagent part including the mixture in the reagent arrangement portion as described above, it is possible to cause the particular reaction in this reagent arrangement portion. In the case where the resultant reaction product further is brought into contact with another reagent so as to cause another reaction, an additional reagent arrangement portion may be provided such that the reagent arrangement portions are arranged in series in the sample moving direction, for example. When conducting different reactions for a given sample, this can be achieved by providing a plurality of reagent arrangement portions in which reagents necessary for causing the reactions are arranged, respectively, in parallel along the sample moving direction and supplying the sample to the respective reagent arrangement portions. When the first analysis tool includes a plurality of reagent arrangement portions, both the reagent part and the magnetic material part may be arranged in each of the reagent arrangement portions, or either one of the reagent part and the magnetic material part may be arranged in each of the reagent arrangement portions.

Before the sample is supplied, the reagent is not necessarily arranged in the reagent arrangement portion, for example. This is the form of the analysis tool in which the reagent part is arranged in a region other than the reagent arrangement portion, for example. In this form of the analysis tool, for example, after the sample has been supplied to the first analysis tool, the sample may move together with the reagent in the reagent part to be led to the reagent arrangement portion.

In the reagent arrangement portion, the magnetic material part may be arranged, which, however, is not always necessary. When the magnetic material part is arranged in the reagent arrangement portion, for example, the water-soluble paste of the magnetic material part is dissolved by the sample (and the reagent) led to the reagent arrangement portion, whereby the magnetic material fine particles are released. The form of the analysis tool in which the magnetic material part is not arranged in the reagent arrangement portion is, for example, the form in which the magnetic material part is arranged in a region other than the reagent arrangement portion. In this case, for example, after the sample has been supplied to the first analysis tool, the water-soluble paste of the magnetic material part is dissolved by the moving sample (and the reagent), whereby the magnetic material fine particles are released. When the magnetic material fine particles thus released are moved to the reagent arrangement portion using, e.g., a magnetic force-applying material as will be described later, they may be led to the reagent arrangement portion together with the sample (and the reagent) or independently from the sample (and the reagent).

Preferably, the first analysis tool of the present invention further includes a sample supply portion and a sample supply channel, and the sample supply portion and the reagent arrangement portion are connected via the sample supply channel.

Preferably, the first analysis tool with the above-described configuration further includes a plurality of reagent arrangement portions and a reagent arrangement portion-connecting channel, and the plurality of reagent arrangement portions are connected to each other via the reagent arrangement portion-connecting channel.

In the above-described configuration, it is preferable that: a reagent arrangement portion-air vent channel and a reagent arrangement portion-air vent hole are provided; the reagent arrangement portion and the reagent arrangement portion-air vent hole are connected to each other via the reagent arrangement portion-air vent channel; and the sample supplied to the sample supply portion is led to the reagent arrangement portion via the sample supply channel by the capillary action caused by the reagent arrangement portion-air vent hole. In this case, it is preferable that the reagent arrangement portion-air vent hole is closed initially and the capillary action is caused when this air vent hole is opened.

The first analysis tool of the present invention further may include an analysis portion. In this case, the analysis portion may be provided independently from the reagent arrangement portion, or alternatively, the reagent arrangement portion may serve also as the analysis portion. In the analysis portion, it is preferable that the magnetic material has moved to the outside of the analysis portion at the time of analysis. Preferably, the analysis portion is an optical analysis portion.

### (Second analysis tool of the present invention)

Next, the second analysis tool of the present invention will be described. The second analysis tool of the present invention is, as described above, an analysis tool that analyzes a component in a sample by reacting the component with a reagent, including: the reagent; and magnetic material fine particles for stirring the sample and the reagent to mix them together. In the second analysis tool of the present invention, a magnetic material-containing reagent part having the reagent that contains the magnetic material fine particles is provided, and the magnetic material fine particles are coated with at least one of a water-insoluble resin and a nonmetallic inorganic material. In the second analysis tool, it is only necessary that the coated magnetic material fine particles are contained in the reagent. Except for this, there is no particular limitation on the configuration etc. of the second analysis tool.

As described above, in the second analysis tool, the magnetic material fine particles are contained in the reagent. Thus, by applying an external magnetic force when the sample is supplied, it is possible to increase the speed at which the reagent is dissolved by the sample supplied, for example. The reason for this presumably is as follows. For example, when the reagent is a dry reagent, the sample and the reagent can be stirred with the dry reagent being subjected to not only the dissolution from the outside by the sample supplied but also the collapse from the inside caused by the magnetic material fine particles, resulting in an increased dissolution speed.

In the second analysis tool of the present invention, the size and the material of the magnetic material fine particle (the magnetic material bead) are not particularly limited and can be the same as those described with regard to the first analysis tool.

In the present invention, the magnetic material fine particles are coated with at least one of a water-insoluble resin and a nonmetallic inorganic material, as described above.

As the nonmetallic inorganic material, silica compounds and ceramics are preferable, for example. Since they are hydrophilic, there is no fear that the magnetic material fine particles might agglutinate during the stirring of the sample and the reagent. Thus, the stirring can be performed efficiently. Examples of the silica compounds include glass, Celite diatomaceous earth, silica polymers, magnesium silicate, silicone-nitrogen compounds) (e.g., SiN₄), aluminum silicate, and silicon dioxide. Among these, glass, zeolite diatomaceous earth, silica polymers, SiN₄, and silicon dioxide are preferable, and glass, zeolite diatomaceous earth, SiN₄, and silicon dioxide are more preferable. Examples of the ceramics include silicon carbide, silicon nitride, alumina, zirconia, and steatite. Among these, silicon carbide and silicon nitride are preferable. The thickness of the coating is not particularly limited, and can be, for example, in the range from 0.04 to 99 µm, preferably from 0.04 to 49 µm, and more preferably from 0.04 to 19 µm. The magnetic material fine particles coated with a nonmetallic inorganic material may be prepared on site, or it is possible to use commercially available products. The proportion of the magnetic material fine particles to the reagent is not particularly limited, and can be, for example, in the range from 0.001 to 60 parts by weight, preferably from 0.01 to 12 parts by weight, and more preferably from 0.02 to 2 parts by weight with respect to 100 parts by weight of the reagent.

The water-insoluble resin is not particularly limited, and can be, for example, a thermoplastic resin or a thermosetting resin. Examples of the resin include polyethylene, polypropylene, polystyrene, polyethylene terephthalate, polybutylene terephthalate, polyvinyl chloride, polytetrafluoroethylene, polyamide, polyimide, polyamide imide, polycarbonate, epoxy resin, phenol resin, and polyurethane. Among these, polypropylene and polystyrene are preferable, and polypropylene is more preferable. When the water-insoluble resin is hydrophobic, the water-insoluble resin may be subjected to a treatment for imparting hydrophilicity. For example, a hydrophilic group such as a hydroxyl group, a carboxyl group, or a sulfone group may be introduced into the water-insoluble resin by a chemical method or a physical method such as plasma processing, or alternatively, the water-insoluble resin may be treated with a surfactant. The treatment for imparting hydrophilicity may be carried out for the water-insoluble resin before or after the coating. By the treatment for imparting hydrophilicity, agglutination of the magnetic material fine particles when stirring the sample and the reagent can be suppressed, so that the stirring can be performed still more efficiently. The thickness of the coating is not particularly limited, and can be, for example, in the range from 0.04 to 99 µm, preferably from 0.04 to 49 µm, and more preferably from 0.04 to 19 µm. The magnetic material fine particles coated with a water-insoluble resin may be prepared on site, or it is possible to use commercially available products. The proportion of the magnetic material fine particles to the reagent is not particularly limited, and can be, for example, in the range from 0.001 to 60 parts by weight, preferably from 0.005 to 12 parts by weight, and more preferably from 0.02 to 2 parts by weight with respect to 100 parts by weight of the reagent.

In the present invention, although the magnetic material fine particles may be coated with either a water-insoluble resin or a nonmetallic inorganic material, it is more preferable that the magnetic material fine particles are coated with a water-insoluble resin from the aspects of the quality of the analysis tool or ease of manufacturing, for example. As will be described later, in the second analysis tool of the present invention, the arrangement of a reagent is achieved by, for example, preparing a coating solution by adding magnetic material fine particles to a solution of the reagent and then mixing them together, applying this coating solution to a predetermined portion of the analysis tool, and then drying the coating solution, for example. In the case where the reagent is arranged by preparing the coating solution as described above, if the magnetic material fine particles are coated with a water-insoluble resin, the coated magnetic material fine particles are lightweight so that there is no fear of settlement of the magnetic material fine particles in the coating solution. If the coated magnetic material fine particles are heavy, the magnetic material fine particles settle in the coating solution during the preparation of the coating solution, so that the dispersion of the magnetic material fine particles in the coating solution may be nonuniform. If such a nonuniform coating solution is used, the amount of magnetic material fine particles in the reagent may vary from one analysis tool to another, and in the case where a plurality of reagents are arranged in one analysis tool, the amount of the magnetic material fine particles may vary from one reagent to another, which may lead to a problem concerning the quality of the analysis tool. In order to solve this problem, it is necessary to stir the coating solution all the time, which, however, deteriorates the manufacturing efficiency Furthermore, examples of a method for preventing the settling of the coated magnetic material fine particles in the coating solution (e.g., a reagent stock solution) include adding a large amount of a water-soluble paste such as polyvinyl alcohol to the coating solution to increase the viscosity of the coating solution. This, however, has a problem in that such a treatment increases the strength of the reagent after being dried, thus making it difficult to dissolve the reagent with a sample supplied. In contrast, when the magnetic material fine particles are coated with a water-insoluble resin as described above, the problems such as the settlement or nonuniform dispersion of the magnetic material fine particles can be avoided, so that an excellent manufacturing efficiency as well as an excellent quality can be achieved. Furthermore, for example, by selecting the thickness of the coating on the magnetic material fine particles, the size of the magnetic material fine particles serving as cores, etc. as appropriate, it is possible to achieve the same weight as the specific gravity of the dispersion (e.g., the reagent solution). Thus, without stirring the coating solution all the time, the amount of the magnetic material fine particles in the reagent per analysis tool or per each of the plurality of reagents can be made uniform. As a result, the quality of the analysis tool can be made excellent without deteriorating the manufacturing efficiency. Moreover, it is also possible to eliminate the necessity of adding the water-soluble paste or to make the amount of the water-soluble paste to be added very small. Consequently, it is possible to obtain a reagent that can be collapsed and stirred easily when reacting with the sample.

The second analysis tool of the present invention may include the single magnetic material-containing reagent part, or two or more of the magnetic material-containing reagent parts. Also, the second analysis tool may include a plurality of reagent parts provided with reagents, and in this case, at least one of the plurality of reagent parts may be the magnetic material-containing reagent part or all of them may be the magnetic material-containing reagent parts.

It is preferable that the second analysis tool of the present invention further includes a reagent arrangement portion (also referred to as a "reagent arrangement region"), and the reagent part (e.g., the magnetic material-containing sample part) preferably is arranged in the reagent arrangement portion. This reagent arrangement portion is provided, for example, in the case where a sample led to the analysis tool is brought into contact with a reagent(s) (one type of reagent or a combination of two or more types of reagents) necessary for causing a particular reaction. The number of the reagent parts in the reagent arrangement portion is not particularly limited, and can be determined as appropriate depending on the types of the reagents necessary for causing the reaction and the combination thereof. Specifically, when a plurality of reagents are necessary for causing a particular reaction, the plurality of reagents necessary for causing the reaction are arranged independently in the reagent arrangement portion, for example. Furthermore, when a sample is brought into contact with two or more types of reagents at the same time, a mixture of the plurality of reagents may be arranged, for example. By providing the plurality of reagent parts or the reagent part including the mixture in the reagent arrangement portion as described above, it is possible to cause the particular reaction in this reagent arrangement portion. In the case where the resultant reaction product further is brought into contact with another reagent so as to cause another reaction, an additional reagent arrangement portion may be provided such that the reagent arrangement portions are arranged in series in the sample moving direction, for example. When causing different reactions using the same sample, this can be achieved by providing a plurality of reagent arrangement portions in which reagents necessary for causing the reactions are arranged, respectively, in parallel along the sample moving direction and supplying the sample to the respective reagent arrangement portions. When the second analysis tool includes a plurality of reagent arrangement portions, the magnetic material-containing reagent part may be arranged in each of the reagent arrangement portions or in at least one of the reagent arrangement portions.

Before the sample is supplied, the reagent is not necessarily arranged in the reagent arrangement portion, for example. This is the form of the analysis tool in which the reagent part is arranged in a region other than the reagent arrangement portion, for example. In this form of the analysis tool, for example, after the sample has been supplied to the second analysis tool, the sample may move together with the reagent in the reagent part to be led to the reagent arrangement portion. Furthermore, when the fine particle-containing reagent part is arranged in a region other than the reagent arrangement portion, for example, the magnetic material may be led to the reagent arrangement portion together with the sample and the reagent or independently from the sample and the reagent. The magnetic material fine particles can be moved using a magnetic force-applying material that will be described later.

Preferably, the analysis tool of the present invention further includes a sample supply portion and a sample supply channel, and the sample supply portion and the reagent arrangement portion are connected via the sample supply channel.

Preferably, the analysis tool with above-described configuration further includes a plurality of reagent arrangement portions and a reagent arrangement portion-connecting channel, and the plurality of reagent arrangement portions are connected to each other via the reagent arrangement portion-connecting channel.

In the above-described configuration, it is preferable that: a reagent arrangement portion-air vent channel and a reagent arrangement portion-air vent hole are provided; the reagent arrangement portion and the reagent arrangement portion-air vent hole are connected to each other via the reagent arrangement portion-air vent channel; and the sample supplied to the sample supply portion is led to the reagent arrangement portion via the sample supply channel by the capillary action caused by the reagent arrangement portion-air vent hole. In this case, it is preferable that the reagent arrangement portion-air vent hole is closed initially and the capillary action is caused when this air vent hole is opened.

The second analysis tool of the present invention further may include an analysis portion. In this case, the analysis portion may be provided independently from the reagent arrangement portion, or alternatively, the reagent arrangement portion may serve also as the analysis portion. In the analysis portion, it is preferable that the magnetic material fine particles have moved to the outside of the analysis portion at the time of analysis. Preferably, the analysis portion is an optical analysis portion.

Next, an analysis tool assembly of the present invention is an assembly of a plurality of analysis tools. The analysis tool used in the analysis tool assembly is at least one of the first analysis tool and the second analysis tool of the present invention. Preferably, the analysis tool assembly of the present invention is configured so that: each of the plurality of analysis tools includes a sample supply portion, a sample supply channel, and a reagent arrangement portion; the sample supply portion and the reagent arrangement portion are connected to each other via the sample supply channel; and the plurality of analysis tools share the same single sample supply portion. Note here that either the first analysis tools or the second analysis tools may be included in the analysis assembly, or both of them may be included in the analysis assembly.

Hereinafter, an analysis tool and an analysis tool assembly according to the present invention will be described by way of examples. It should be noted that the present invention is by no means limited by the following examples.

### Example 1

### (First analysis tool)

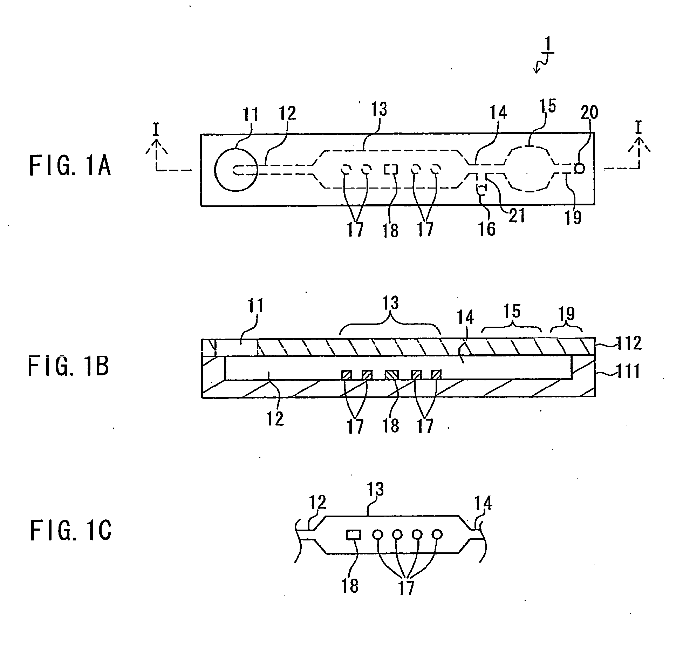

FIG. 1 shows a first analysis tool of the present example. FIG. 1A is a plan view of the first analysis tool, FIG. 1B is a sectional view taken along arrows I-I in FIG. 1A, and FIG. 1C is a plan view showing a part of the first analysis tool.

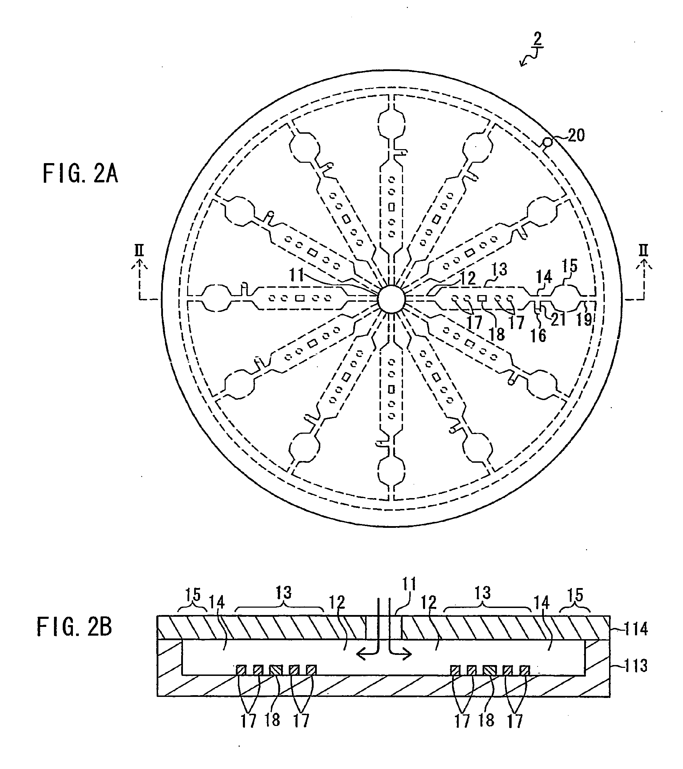

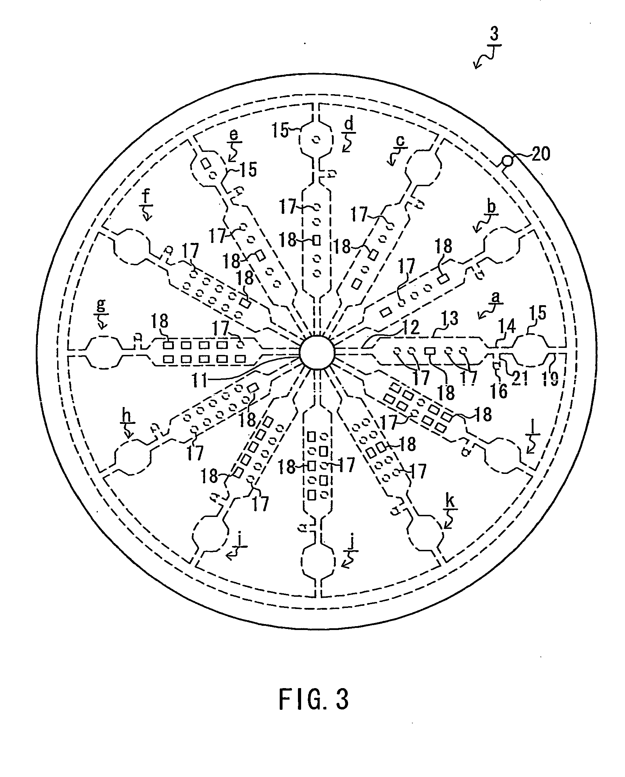

As shown in the drawings, an analysis tool 1 of the present example includes a substrate 111 and a cover 112 arranged on the substrate 111. Inside the substrate 111, a first reagent arrangement portion 13 and a second reagent arrangement portion 15 are formed, and they are connected via a reagent arrangement portion-connecting channel 14. The cover 112 has an opening, and this opening serves as a sample supply portion 11. The sample supply portion 11 and the first reagent arrangement portion 13 are connected via a sample supply channel 12. The first reagent arrangement portion 13 is connected to a first reagent arrangement portion-air vent hole 16 via a first reagent arrangement portion-air vent channel 21 branching off from the reagent arrangement portion-connecting channel 14. The second reagent arrangement portion 15 is connected to a second reagent arrangement portion-air vent hole 20 via a second reagent arrangement portion-air vent channel 19. The first reagent arrangement portion-air vent hole 16 and the second reagent arrangement portion-air vent hole 20 are closed initially. In the first reagent arrangement portion 13, four reagent parts 17 and one magnetic material part 18 are formed so as to be spaced form each other. It is to be noted that, although the reagent parts 17 are represented by circles (open circles) and the magnetic material part 18 is represented by a square (an open square) in FIG. 1 for illustration, the present invention is not limited thereto. The reagent parts 17 and the magnetic material part 18 can have any shapes, which also applies to FIGS. 2 and 3 that will be described later. In each of the reagent parts 17, a reagent is provided. A magnetic bead (an assembly of magnetic material fine particles) is fixed to the magnetic material part 18 with a water-soluble paste. The arrangement of the reagent parts 17 and the magnetic material part 18 is not particularly limited. That is, as shown in, e.g., FIGS. 1A and 1B, the magnetic material part 18 may be arranged between the two reagent parts 17 and the two reagent parts 17. Alternatively, as shown in FIG. 1C, the magnetic material part 18 may be arranged in an end portion on the sample supply portion 11 side (the left end portion in FIG. 1C), and the four reagent parts 17 may be arranged subsequent to the magnetic material part 18. In the analysis tool of the present invention, the arrangement of the reagent parts 17 and the magnetic material part 18 is not particularly limited, and can be, for example, as shown in FIG. 3 that will be described later. The second reagent arrangement portion 15 also serves as an optical analysis portion. In the second reagent arrangement portion 15, the reagent parts 17 or the magnetic material part 18 may be arranged, which, however, is not always necessary.

In the present invention, materials of the components of the analysis tool are not particularly limited. Examples of the materials of the substrate and the cover include polystyrene, polymethyl methacrylate, polydimethylsiloxane, polyethylene terephthalate, and glass. For example, in the case where an optical measurement, e.g., spectrometry by the measurement of transmitted light, is performed in the reagent arrangement portion 15, it is preferable to use light-transmitting materials.

In the present invention, the size of the analysis tool is not particularly limited. For example, when the analysis tool of the present example has a generally rectangular plate shape, the size thereof is in the range from, for example, 10 to 20 mm in length, 0.5 to 1 mm in width, and 1 to 3 mm in thickness. Furthermore, in the analysis tool of the present example, the size of the first reagent arrangement portion 13 is in the range from, for example, 0.5 to 10 mm in length, 0.3 to 1 mm in width, and 0.05 to 1 mm in height. The size of the second reagent arrangement portion 15 is in the range from, for example, 0.5 to 2 mm in length, 0.5 to 2 mm in width, and 0.05 to 1 mm in height. When the sample supply portion 11 is circular, it has a diameter in the range from 1 to 2 mm, for example. The size of the sample supply channel 12 is in the range from, for example, 0.05 to 1 mm in length, 0.05 to 2 mm in width, and 0.05 to 0.5 mm in depth. The size of the reagent arrangement portion-connecting channel 14 is in the range from, for example, 0.5 to 3 mm in length, 0.05 to 0.2 mm in width, and 0.05 to 0.5 mm in depth. The size of the first reagent arrangement portion-air vent channel 21 1 branching off from the reagent arrangement portion-connecting channel 14 is in the range from, for example, 0.5 to 1 mm in length, 0.05 to 0.2 mm in width, and 0.05 to 0.5 mm in depth. The size of the second reagent arrangement portion-air vent channel 19 is in the range from, for example, 0.5 to 2 mm in length, 0.05 to 2 mm in width, and 0.05 to 0.5 mm in depth. When the first reagent arrangement portion-air vent hole 16 is circular, it has a diameter in the range from 0.5 to 2 mm, for example. When the second reagent arrangement portion-air vent hole 20 is circular, it has a diameter in the range from 0.5 to 2 mm, for example. Furthermore, in the analysis tool of the present example, when the reagent part 17 is circular, the size thereof is in the range from 0.1 to 1 mm in maximum diameter and 1 to 100 µm in thickness, for example. When the magnetic material part 18 is circular, the size thereof is in the range from 0.1 to 1 mm in maximum diameter and 1 to 100 µm in thickness, for example.

In the present invention, the method for manufacturing the analysis tool is not particularly limited. The analysis tool of the present example can be manufactured in the following manner, for example. A resin plate formed of any of the materials listed above is processed so as to have grooves or recesses at predetermined positions using a laser beam, a cutting tool, or the like, thus forming the substrate 111. Similarly, another resin plate formed of any of the materials listed above is processed so as to perforate predetermined portions thereof using a laser beam, a cutting tool, or the like, thus forming the cover 112. The analysis tool is obtained by placing the cover 112 on the substrate 111 and integrating them. The method for integrating them is not particularly limited, and can be heat-sealing or a method using a two-sided tape. As the two-sided tape, those available from various manufacturers can be used, but it is preferable to use HJ-3160 (trade name) or NITT05000 (trade name) manufactured by Nitto Denko Corporation, for example. In the present invention, the method of providing the reagent parts 17 and the magnetic material part 18 is not particularly limited. In the present example, for example, a reagent solution and a water-soluble paste solution containing a magnetic material are prepared, and these solutions are applied to predetermined positions in the reagent arrangement portion and then dried. The method of applying the solutions is not particularly limited, and can be, for example, a printing method. Examples of the printing method include an ink jet method. The concentration of the water-soluble paste in the water-soluble paste solution containing the magnetic material preferably is at least 0.1 wt%. When the concentration is in this range, it is possible to sufficiently prevent settling of the magnetic material fine particles (the magnetic beads) in the water-soluble paste solution, e.g., in a tank of an ink jet apparatus and settling of the fine particles in the magnetic material part 18 before being dried after the printing. Thus, it is possible to obtain the solutions in which the fine particles are dispersed uniformly. A more preferable range of the water-soluble paste concentration in the water-soluble paste solution is set as appropriate depending on the type of the water-soluble paste etc. When the water-soluble paste is CMC or PVA, the concentration thereof is in the range from 0.01 to 20 wt%, for example. If the concentration of the water-soluble paste in the water-soluble paste solution is higher than necessary, when the analysis tool is in actual use after the drying, the magnetic material part 18 cannot be collapsed easily by the test sample, so that it might take a long time until the magnetic material shifts to a stirring operation, for example. The concentration of the magnetic material fine particles in the water-soluble paste solution is not particularly limited, and can be, for example, in the range from 0.1 to 50 wt%, preferably from 0.5 to 25 wt%, and more preferably from 1 to 10 wt%. The drying can be air drying or forced drying using hot air.

In the present invention, the sample to be analyzed is not particularly limited, and can be, for example, a biological sample such as whole blood, plasma, serum, lymph, urine, nasal secretion, sputum, a cell crush, a tissue crush, and an organ crush.

In the present invention, the type of the reagent is not particularly limited, and can be selected as appropriate depending on an analyte.

Analysis of a component in a sample using the analysis tool of the present example can be carried out in the following manner, for example. That is, first, a liquid sample is supplied to the sample supply portion 11. Then, the first reagent arrangement portion-air vent hole 16 is opened. The opening can be achieved using a laser beam or a perforating tool such as a needle, for example. Capillary action is caused by the opening operation, whereby the sample is led to the first reagent arrangement portion 13 through the sample supply channel 12. The sample dissolves the reagent provided in the reagent parts 17 and also dissolves the water-soluble paste fixing the magnetic material in the magnetic material part 18. Then, by moving the magnetic material using a magnetic force-applying material (not shown), the sample solution is stirred so as to dissolve the reagent uniformly, thereby causing a reaction. The magnetic force-applying material is not particularly limited, and can be a permanent magnet or an electromagnet, for example. Next, in the same manner as described above, the second reagent arrangement portion-air vent hole 20 is opened to cause capillary action, whereby the sample is led to the second reagent arrangement portion 15 through the reagent arrangement portion-connecting channel 14. At this time, in the case where a reagent is arranged also in the second reagent arrangement portion 15, the sample is led thereto in the state in which the magnetic material is contained in the sample. Then, by moving the magnetic material using the magnetic force-applying material in the second reagent arrangement portion 15, the sample solution is stirred so as to dissolve the reagent uniformly, thereby causing a reaction. Subsequently, using the magnetic force-applying material, only the magnetic material is led out to the outside of the second reagent arrangement portion 15. For example, the magnetic material may be led to the first reagent arrangement portion 13 again. Then, the reaction between the sample and the reagent is analyzed using the second reagent arrangement portion 15 as an analysis portion. In the case where the reaction can be analyzed optically, the analysis is performed by an optical method (e.g., a spectrophotometer). On the other hand, when the second reagent arrangement portion 15 is used merely as an analysis portion without arranging a reagent thereon, only the sample is led to the second reagent arrangement portion 15 by capillary action with the magnetic material being fixed and held in the first reagent arrangement portion 13 by the magnetic force-applying material, and the analysis is carried out in the same manner as in the above in the second reagent arrangement portion 15. The magnetic material particles may be moved by, for example, capillary action, without using the magnetic force-applying material.

### Example 2

### (First analysis tool assembly)

Next, an example of an analysis tool assembly in which the first analysis tools of the present invention are used will be described.

FIG. 2 shows an analysis tool assembly of the present example. FIG. 2A is a plan view of the analysis tool assembly and FIG. 2B is a sectional view taken along arrows II-II in FIG. 2A. In FIG. 2, the same components as those in FIG. 1 are given the same reference numerals.

As shown in the drawings, an analysis tool assembly 2 of the present example is obtained by arranging a circular cover 114 on a circular substrate 113 and integrating them, and twelve analysis tools according to Example 1 are formed by the assembled circular substrate 113 and circular cover 114. Each of the analysis tools in the analysis tool assembly of the present example has a sample supply portion 11, a sample supply channel 12, a first reagent arrangement portion 13, a first reagent arrangement portion-air vent channel 21, a first reagent arrangement portion-air vent hole 16, reagent parts 17, a magnetic material part 18, a reagent arrangement portion-connecting channel 14, a second reagent arrangement portion 15, a second reagent arrangement portion-air vent channel 19, and a second reagent arrangement portion-air vent hole 20. In the analysis tool assembly of the present example, the respective analysis tools share the same single sample supply portion 11 and also share the same single second reagent arrangement portion-air vent hole 20.

In the present invention, the materials of the components of the analysis tool assembly are not particularly limited, and examples thereof include those usable for the above-described analysis tool.

In the present invention, the size of the analysis tool assembly is not particularly limited. The size of the analysis tool assembly of the present example is in the range from, for example, 40 to 50 mm in diameter and 1 to 3 mm in thickness. The size of each of the analysis tools in the analysis tool assembly of the present example is as described above, for example. In the analysis tool assembly of the present example, when the sample supply portion 11 is circular, the size thereof is in the range from 7 to 13 mm, for example.

In the present invention, the method for manufacturing the analysis tool assembly is not particularly limited. The analysis tool assembly of the present example can be manufactured in the following manner, for example. A resin plate formed of any of the materials listed above is processed so as to have grooves or recesses at predetermined positions using a laser beam, a cutting tool, or the like, thus forming the substrate 113. Similarly, another resin plate formed of any of the materials listed above is processed so as to perforate predetermined portions thereof using a laser beam, a cutting tool, or the like, thus forming the cover 114. The analysis tool assembly is obtained by placing the cover 114 on the substrate 113 and integrating them. The integration can be achieved in the above-described manner, for example. Also, the arrangement of the reagent parts 17 and the magnetic material part 18 can be carried out in the above-described manner, for example.

Analysis of a component in a sample using the analysis tool of the present example can be carried out in the same manner as in Example 1, except that the sample is supplied to the single sample supply portion 11 common to all the analysis tools and the single second reagent arrangement portion-air vent hole 20 common to all the analysis tools is opened. In FIG. 2B, arrows indicate the moving directions of the sample supplied. By using the analysis tool assembly of the present example, analysis for a plurality of items can be carried out with a single sample.

Next, an example of an analysis tool assembly 3 in which the arrangement of a reagent part(s) 17 and a magnetic material part(s) 18 differs from one analysis tool to another is shown in the plan view of FIG. 3. In FIG. 3, the same components as those in FIGS.1 and 2 are given the same reference numerals.

As shown in FIG. 3, the analysis tool assembly 3 according to the present example has twelve types of analysis tools *a* to *l* that differ from one another in the arrangement of the reagent part(s) 17 and the magnetic material part(s) 18. In a first reagent arrangement portion 13 of the analysis tool a, the arrangement is the same as that in the analysis tool assembly 2 described above. That is, a single magnetic material part 18 is arranged between two reagent parts 17 and two reagent parts 17. In a first reagent arrangement portion 13 of the analysis tool b, the arrangement is such that two magnetic material parts 18 are provided at both ends and three reagent parts 17 are arranged between the magnetic material parts 18. In a first reagent arrangement portion 13 of the analysis tool c, the arrangement is such that a magnetic material part 18, a reagent part 17, a magnetic material part 18, a reagent part 17, and a reagent part 17 are arranged in this order the sample supply portion 11 side. In a first reagent arrangement portion 13 of the analysis tool *d*, the arrangement is the same as that in the analysis tool *a.* However, in the analysis tool *d*, one reagent part 17 is formed also in a second reagent arrangement portion 15. In a first reagent arrangement portion 13 of the analysis tool *e*, the arrangement is the same as that in the analysis tool *a*. However, in the analysis tool *e*, one reagent part 17 and one magnetic material part 18 are formed in a second reagent arrangement portion 15. In a first reagent arrangement portion 13 of the analysis tool *f*, the arrangement is a two-row arrangement in which one magnetic material part 18 is provided and the rest are reagent parts 17. In a first reagent arrangement portion 13 of the analysis tool *g*, the arrangement is in direct contrast to the arrangement in the analysis tool *f.* Specifically, the arrangement is two-row arrangement in which one reagent part 17 is provided and the rest are magnetic material parts 18. In a first reagent arrangement portion 13 of the analysis tool *h*, the arrangement is such that reagent parts 17 are arranged in two rows, and one magnetic material part 18 is arranged on the sample supply portion 11 side independently from the two rows. In a first reagent arrangement portion 13 of the analysis tool *i*, the arrangement is such that five reagent parts 17 are arranged in series and five magnetic material parts 18 are arranged in series beside the row of the reagent parts 17. In a first reagent arrangement portion 13 of the analysis tool *j*, the arrangement is such that reagent parts 17 and magnetic material parts 18 are arranged alternately so as to form two rows. In a first reagent arrangement portion 13 of the analysis tool *k,* the arrangement is a two-row arrangement with the arrangement in each of the rows being the same as that in the analysis tool a. In a first reagent arrangement portion 13 of the analysis tool *l*, the arrangement is a two-row arrangement with the arrangement in each of the row is such that one reagent part 17 is arranged between two magnetic material parts 18 and two magnetic material parts 18.

As described above, according to the present invention, the arrangement of the reagent part(s) 17 and the magnetic material part(s) 18 may be in various forms. There are a variety of reasons for this. For example, when a sample needs to be stirred constantly, it is preferable that, as in the case of the analysis tool e, the magnetic material part 18 is provided not only in the first reagent arrangement portion 13 but also in the second reagent arrangement portion 15. Furthermore, when it is necessary to make the concentration of a reagent high relative to the amount of a sample to be supplied, the number of the reagent parts 17 may be increased as in the case of the analysis tools *f* and *h.* Moreover, considering the stirring efficiency, it is necessary to arrange the reagent and the magnetic material at positions where they can be mixed together easily. In such a case, the arrangement as in the analysis tool *j* may be employed, for example. Still further, with consideration given to the dissolving efficiency, a two-row arrangement may be employed as in the case of the analysis tools *f* to *l* in order to reduce the sizes of the reagent part 17 and the magnetic material part 18 and to increase the numbers of the reagent parts 17 and the magnetic material parts 18. Moreover, in order to improve the stirring efficiency, two or more magnetic material parts 18 may be provided and arranged so as to be spaced apart from each other as in the case of the analysis tool *b*.

The analysis tool assembly in which the analysis tools of the present invention are used can analyze a plurality of items, for example. In this case, different reagents are arranged in the respective analysis tools, and these reagents differ from one another in reaction principle. Thus, the timing and mechanism of the stirring using a magnetic material may vary from one analysis tool to another.

### Example 3

### (Second analysis tool: Embodiment 1)

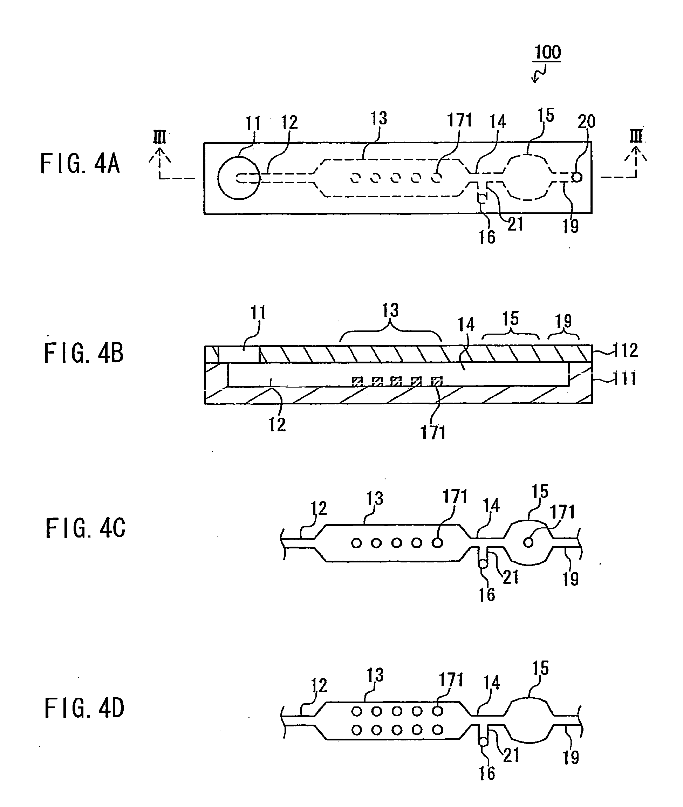

FIG. 4 shows a second analysis tool of the present example. FIG. 4A is a plan view of the analysis tool, FIG. 4B is a sectional view taken along arrows III-III in FIG. 4A, and FIGS. 4C and 4D are plan views showing a part of the analysis tool.

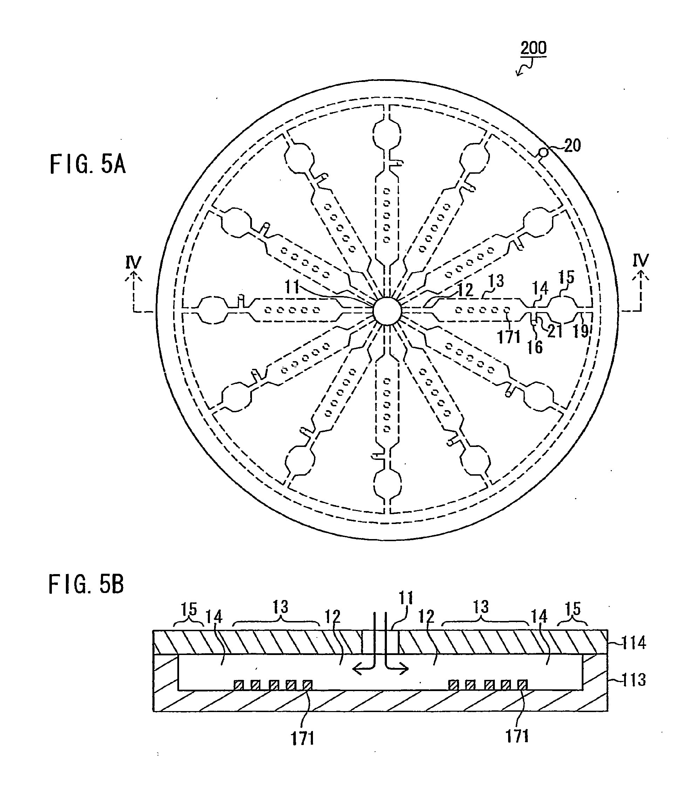

As shown in the drawings, an analysis tool 100 of the present example includes a substrate 111 and a cover 112 arranged on the substrate 111. Inside the substrate 111, a first reagent arrangement portion 13 and a second reagent arrangement portion 15 are formed, and they are connected via a reagent arrangement portion-connecting channel 14. The cover 112 has an opening, and this opening serves as a sample supply portion 11. The sample supply portion 11 and the first reagent arrangement portion 13 are connected via a sample supply channel 12. The first reagent arrangement portion 13 is connected to a first reagent arrangement portion-air vent hole 16 via a first reagent arrangement portion-air vent channel 21 branching off from the reagent arrangement portion-connecting channel 14. The second reagent arrangement portion 15 is connected to a second reagent arrangement portion-air vent hole 20 via a second reagent arrangement portion-air vent channel 19. The first reagent arrangement portion-air vent hole 16 and the second reagent arrangement portion-air vent hole 20 are closed initially. In the first reagent arrangement portion 13, five reagents are arranged. It is to be noted that, although reagent parts 171 are represented by circles (open circles) in FIGS. 4A, 4C, and 4D for illustration, the present invention is not limited thereto. The reagent parts 171 can have any shapes, which also applies to FIG. 5 that will be described later. The reagent 171 contains the above-described magnetic material fine particles.

The magnetic material fine particles are coated with a water-insoluble resin or a nonmetallic inorganic material. A preferable example of the magnetic material fine particles coated with a water-insoluble resin is magnetic material fine particles coated with polypropylene (magnetic beads coated with polypropylene), as described above. Furthermore, a preferable example of the magnetic material fine particles coated with a nonmetallic inorganic material is magnetic material fine particles coated with a silica compound (magnetic beads coated with silica), as described above.

The arrangement of the reagent parts 171 is not particularly limited, and can be such that, for example, as shown in FIGS. 4A and 4B, five reagent parts 171 are arranged in one row only in the first reagent arrangement portion 13. In addition to this, the arrangement can be such that, for example, as shown in FIG. 4C, five reagent parts 171 are arranged in one row in the first reagent arrangement portion 13 and one reagent part 171 is arranged in the second reagent arrangement portion 15. Furthermore, the arrangement can be such that, for example, as shown in FIG. 4D, ten reagent parts 171 are arranged in two rows (five reagent parts in each of the rows) only in the first reagent arrangement portion 13. The second reagent arrangement portion 15 also serves as an optical analysis portion. As described above, before the sample is supplied, the reagent parts 171 may be arranged in the second reagent arrangement portion 15, which, however, is not always necessary.

In the present invention, materials of the components of the analysis tool are not particularly limited. Examples of the materials of the substrate and the cover include, as described above, polystyrene, polymethyl methacrylate, polydimethylsitoxane, polyethylene terephthalate, and glass. For example, in the case where an optical measurement, e.g., spectrometry by the measurement of transmitted light, is performed in the reagent arrangement portion 15, it is preferable to use light-transmitting materials.

In the present invention, the size of the analysis tool is not particularly limited. For example, when the analysis tool of the present example has a generally rectangular plate shape, the size thereof is in the range from 10 to 20 mm in length, 0.5 to 1 mm in width, and 1 to 3 mm in thickness. Furthermore, in the analysis tool of the present example, the size of the first reagent arrangement portion 13 is in the range from, for example, 0.5 to 10 mm in length, 0.3 to 1 mm in width, and 0.05 to 1 mm in height. The size of the second reagent arrangement portion 15 is in the range from, for example, 0.5 to 2 mm in length, 0.5 to 2 mm in width, and 0.05 to 1 mm in height. When the sample supply portion 11 is circular, it has a diameter in the range from 1 to 2 mm, for example. The size of the sample supply channel 12 is in the range from, for example, 0.05 to 1 mm in length, 0.05 to 2 mm in width, and 0.05 to 0.5 mm in depth. The size of the reagent arrangement portion-connecting channel 14 is in the range from, for example, 0.5 to 3 mm in length, 0.05 to 0.2 mm in width, and 0.05 to 0.5 mm in depth. The size of the first reagent arrangement portion-air vent channel 21 1 branching off from the reagent arrangement portion-connecting channel 14 is in the range from, for example, 0.5 to 1 mm in length, 0.05 to 0.2 mm in width, and 0.05 to 0.5 mm in depth. The size of the second reagent arrangement portion-air vent channel 19 is in the range from, for example, 0.5 to 2 mm in length, 0.05 to 2 mm in width, and 0.05 to 0.5 mm in depth. When the first reagent arrangement portion-air vent hole 16 is circular, it has a diameter in the range from 0.5 to 2 mm, for example. When the second reagent arrangement portion-air vent hole 20 is circular, it has a diameter in the range from 0.5 to 2 mm, for example. Furthermore, in the analysis tool of the present example, when the reagent part 171 is circular, the size thereof is in the range from 0.1 to 1 mm in maximum diameter and 1 to 100 µm in thickness, for example.

In the present invention, the method for manufacturing the analysis tool is not particularly limited. The analysis tool of the present example can be manufactured in the following manner, for example. A resin plate formed of any of the materials listed above is processed so as to have grooves or recesses at predetermined positions using a laser beam, a cutting tool, or the like, thus forming the substrate 111. Similarly, another resin plate formed of any of the materials listed above is processed so as to perforate predetermined portions thereof using a laser beam, a cutting tool, or the like, thus forming the cover 112. The analysis tool is obtained by placing the cover 112 on the substrate 111 and integrating them. The method for integrating them is not particularly limited, and can be heat-sealing or a method using a two-sided tape. As the two-sided tape, those available from various manufacturers can be used, but it is preferable to use HJ-3160 (trade name) or NITT05000 (trade name) manufactured by Nitto Denko Corporation, for example. In the present invention, the method of providing the reagent parts 171 is not particularly limited. In the present example, for example, coating solutions are prepared by adding the above-described magnetic material fine particles (magnet beads) to solutions of the respective reagents, and the coating solutions are applied to predetermined positions in the reagent arrangement portion and then dried. The method of applying the solutions is not particularly limited, and can be, for example, a printing method. Examples of the printing method include an ink jet method. The concentration of the magnetic material fine particles in the coating solution is not particularly limited, and can be, for example, in the range from 0.001 to 50 wt%, preferably from 0.01 to 10 wt%, and more preferable from 0.02 to 1 wt% with respect to the entire coating solution. The drying is not particularly limited, and can be air drying or forced drying using hot air.

In the present invention, the sample to be analyzed is not particularly limited, and can be, for example, a biological sample such as whole blood, plasma, serum, lymph, urine, nasal secretion, sputum, a cell crush, a tissue crush, and an organ crush.

In the present invention, the type of the reagent is not particularly limited, and can be selected as appropriate depending on an analyte.

Analysis of a component in a sample using the analysis tool of the present example can be carried out in the following manner, for example. That is, first, a liquid sample is supplied to the sample supply portion 11. Then, the first reagent arrangement portion-air vent hole 16 is opened. The opening can be achieved using a laser beam or a perforating tool such as a needle, for example. Capillary action is caused by the opening operation, whereby the sample is led to the first reagent arrangement portion 13 through the sample supply channel 12, and the sample dissolves the reagents provided in the reagent parts 171. At this time, if the reagents are subjected also to a magnetic force caused by a magnetic force-applying material (not shown) at the same time, the reagents are collapsed from the inside by the kinetic energy of the magnetic material fine particles because the reagents provided in the reagent parts 171 contain the magnetic material fine particles. Thus, the reagents are dissolved quickly. Then, by moving the magnetic material fine particles using the magnetic force-applying material, the sample and the reagents are stirred so as to dissolve the reagents uniformly, thereby causing a reaction. The magnetic force-applying material is not particularly limited, and a permanent magnet and an electromagnet can be used as the magnetic force-applying material, for example. Next, in the same manner as described above, the second reagent arrangement portion-air vent hole 20 is opened to cause capillary action, whereby the sample is led to the second reagent arrangement portion 15 through the reagent arrangement portion-connecting channel 14. At this time, when a reagent is present also in the second reagent arrangement portion 15, the sample is led thereto with the magnetic material fine particles being contained in the sample. Then, by moving the magnetic material fine particles using the magnetic force-applying material in the second reagent arrangement portion 15, the sample and the reagent are stirred so as to dissolve the reagent uniformly, thereby causing a reaction. Subsequently, using the magnetic force-applying material, only the magnetic material fine particles are led out to the outside of the second reagent arrangement portion 15. For example, the magnetic material fine particles may be led to the first reagent arrangement portion 13 again. Then, the reaction between the sample and the reagent is analyzed using the second reagent arrangement portion 15 as an analysis portion. In the case where the reaction can be analyzed optically, the analysis is performed by an optical method (e.g., a spectrophotometer). On the other hand, when the reagent is not arranged in the second reagent arrangement portion 15 before the sample is supplied, only the sample in which the reagents have been mixed is led to the second reagent arrangement portion 15 by capillary action, with the magnetic material fine particles being fixed and held in the first reagent arrangement portion 13 by the magnetic force-applying material, and the analysis is carried out in the same manner as in the above in the second reagent arrangement portion 15.

### Example 4

Next, an example of an analysis tool assembly in which the second analysis tools of the present invention are used will be described.

FIG. 5 shows the analysis tool assembly of the present example. FIG. 5A is a plan view of the analysis tool assembly and FIG. 5B is a sectional view taken along arrows IV-IV in FIG. 5A. In FIG. 5, the same components as those in FIG. 4 are given the same reference numerals.

As shown in the drawings, an analysis tool assembly 200 of the present example is obtained by arranging a circular cover 114 on a circular substrate 113 and integrating them, and twelve analysis tools according to Example 3 are formed by the assembled circular substrate 113 and circular cover 114. Each of the analysis tools in the analysis tool assembly of the present example has a sample supply portion 11, a sample supply channel 12, a first reagent arrangement portion 13, a first reagent arrangement portion-air vent channel 21, a first reagent arrangement portion-air vent hole 16, reagent parts 171, a reagent arrangement portion-connecting channel 14, a second reagent arrangement portion 15, a second reagent arrangement portion-air vent channel 19, and a second reagent arrangement portion-air vent hole 20. In the analysis tool assembly of the present example, the respective analysis tools share the same single sample supply portion 11 and also share the same single second reagent arrangement portion-air vent hole 20. The arrangement of the reagent parts 171 in the analysis tool assembly of the present example is not particularly limited. All the analysis tools may have the same arrangement as shown in FIG. 5, or the arrangement may be different from one analysis tool to another.

In the present invention, the materials of the components of the analysis tool assembly are not particularly limited, and examples thereof include those usable for the above-described analysis tool.

In the present invention, the size of the analysis tool assembly is not particularly limited. The size of the analysis tool assembly of the present example is in the range from, for example, 40 to 50 mm in diameter and 1 to 3 mm in thickness. The size of each of the analysis tools in the analysis tool assembly of the present example is as described above, for example. In the analysis tool assembly of the present example, when the sample supply portion 11 is circular, it has a diameter in the range from7 to 13 mm, for example.

In the present invention, the method for manufacturing the analysis tool assembly is not particularly limited. The analysis tool assembly of the present example can be manufactured in the following manner, for example. A resin plate formed of any of the materials listed above is processed so as to have grooves or recesses at predetermined positions using a laser beam, a cutting tool, or the like, thus forming the substrate 113. Similarly, another resin plate formed of any of the materials listed above is processed so as to perforate predetermined portions thereof using a laser beam, a cutting tool, or the like, thus forming the cover 114. The analysis tool assembly is obtained by placing the cover 114 on the substrate 113 and integrating them. The integration can be achieved in the above-described manner, for example. Also, the arrangement of the reagent parts 171 can be carried out in the above-described manner, for example.

Analysis of a component in a sample using the analysis tool of the present example can be carried out in the same manner as in Example 1, except that the sample is supplied to the single sample supply portion 11 common to all the analysis tools and the single second reagent arrangement portion-air vent hole 20 common to all the analysis tools is opened. In FIG. 5B, arrows indicate the moving directions of the sample supplied. By using the analysis tool assembly of the present example, analysis for a plurality of items can be carried out with a single sample.

The analysis tool assembly in which the analysis tools of the present invention are used can analyze a plurality of items, for example. In this case, different reagents are arranged in the respective analysis tools, and these reagents differ from one another in reaction principle. Thus, the timing and mechanism of the stirring using a magnetic material may vary from one analysis tool to another.

### Industrial Applicability

As specifically described above, the analysis tool of the present invention can achieve excellent stirring efficiency and can yield highly accurate and reliable analytical values. Accordingly, the analysis tool of the present invention is applicable to all the fields of analysis where liquid stirring is required, and can be used favorably in the field of clinical tests, for example.

## Claims

1. An analysis tool that analyzes a component in a sample by reacting the component with a reagent, the analysis tool comprising:
the reagent; and
a magnetic material fine particle for stirring the sample and the reagent to mix the sample and the reagent together,
wherein a reagent part having the reagent and a magnetic material part having the magnetic material fine particle are provided at different positions in the analysis tool, and the magnetic material fine particle is fixed to the analysis tool with a water-soluble paste.

2. The analysis tool according to claim 1, wherein the water-soluble paste comprises at least one selected from the group consisting of water-soluble polymers, saccharides, and proteins.

3. The analysis tool according to claim 1, wherein the magnetic material fine particle is coated with at least one of a water-insoluble resin and a nonmetallic inorganic material.

4. The analysis tool according to claim 1, comprising a substrate,
wherein the reagent part and the magnetic material part are provided on the substrate, and the magnetic material fine particle is fixed to the substrate with the water-soluble paste.

5. The analysis tool according to claim 1, further comprising a reagent arrangement portion,
wherein the reagent part is arranged in the reagent arrangement portion.

6. The analysis tool according to claim 1, further comprising a reagent arrangement portion,
wherein the magnetic material part is arranged in the reagent arrangement portion.

7. The analysis tool according to claim 1, comprising, instead of the reagent part and the magnetic material part provided at the different positions, a magnetic material-containing reagent part having the reagent that contains the magnetic material fine particle,
wherein the magnetic material fine particle is coated with at least one of a water-insoluble resin and a nonmetallic inorganic material.

8. The analysis tool according to claim 7, comprising a plurality of reagent parts each including a reagent,
wherein at least one of the plurality of reagent parts is the magnetic material-containing reagent part.

9. The analysis tool according to claim 7, wherein the water-insoluble resin is polypropylene.

10. The analysis tool according to claim 7, wherein the nonmetallic inorganic material is at least one of a silica compound and a ceramic.

11. The analysis tool according to claim 7, comprising a substrate,
wherein the magnetic material-containing reagent part is provided on the substrate.

12. The analysis tool according to claim 7, further comprising a reagent arrangement portion,
wherein the magnetic material-containing reagent part is arranged in the reagent arrangement portion.

13. The analysis tool according to claim 1, wherein the magnetic material fine particle has a diameter ranging from 0.1 to 100 µm.

14. The analysis tool according to claim 1, wherein the magnetic material fine particle has a diameter ranging from 0.1 to 50 µm.

15. The analysis tool according to claim 5 or 12, further comprising a sample supply portion and a sample supply channel,
wherein the sample supply portion and the reagent arrangement portion are connected via the sample supply channel.

16. The analysis tool according to claim 2, wherein the water-soluble polymer is carboxymethyl cellulose.

17. The analysis tool according to claim 2, wherein the saccharide is at least one selected from the group consisting of glucose, sucrose, sorbitol, and trehalose.

18. The analysis tool according to claim 2, wherein the protein is at least one of albumin and a silk protein.
